# EUROPEAN PATENT APPLICATION

(11) **EP 1 870 254 A1**
(43) Date of publication of application: **26.12.2007**
(21) Application number: 07012291.6
(22) Date of filing: 22.06.2007
(51) Int. Cl.: B60B 5/02, B60B 19/00

(54) **Wheel to be incorporated in vehicles of automatic movement and control, preferably robot type vehicles for use over rugged terrain, with slopes, rough, muddy or slippery in general**

(30) Priority: 23.06.2006 CL 161106
(71) Applicant: Macroswiss S.A., 6900 Lugano (CH)
(72) Inventor: Castelli, Cino Robin, 6900 Lugano (CH); Suarez, Pablo, Las Condes, Santiago (CL)
(74) Representative: Durán Moya, Luis-Alfonso

(57) **Abstract**

The present invention relates to a wheel to be incorporated preferably in movable automatized equipment, for example, a vehicle remotely controlled. It specifically relates to a rubber body wheel with flexible flaps (4) intended to increase the total contact surface area due to its shape which semi- involves the surface against which it spins. This wheel may be used in vehicles, in small or medium robot vehicles basically used in spy tasks in rough terrain.

## Description

The present invention relates to a wheel to be incorporated preferably in movable automatized equipment, for example, a vehicle remotely controlled. It specifically relates to a rubber body wheel with flexible flaps intended to increase the total contact surface area due to its shape which semi- involving the surface against which it spins. This wheel may be used in vehicles, in small or medium robot vehicles basically used in spy tasks in rough terrain.

In present day, there are a number of solutions related to the creation of robotized vehicles with multiple driving motor intended for different uses. One of the fundamental problems of this type of vehicles has to do with the driving means, given its low weight over the surface over which it moves. Given the above, its use has not been massified, particularly to espionage tasks in the military field, given the adverse conditions of the terrains in which it must operate.

Within the state of the art, numerous solutions have been developed tending to develop traction systems for robot vehicles in general. Patent DE4101150 describes a typical application which includes a traction motor based on tires mounted on two sides of an axis through a right driving angle. The movement of the axis of the vehicle is horizontal to a transversal X axis, perpendicular to the Y axis, and below a Z axis. It includes an outer wheel with a flap or sheet to remove obstacles such as ladders or imperfections. However, this system has difficulty in moving in pronounced slopes with loose terrain, since the adherence to the same is strongly diminished.

Another type of solution is described in Patent DE10010680 which relates to an harmonic driving system for industrial robots which has an internal wheel with movable supports pursuant to the collar rotor or rotation direction. This wheel may suffer deformations under controlled conditions of said collar rotor. To this effect, it contains axis which are connected and subdivided both transversally or radially with respect to the main axis of the wheel. In this form, an internal buffer effect of the wheel is created which allows changing its form pursuant to the terrain conditions. Notwithstanding, this solution poses the problem that its mechanisms are too weak for military espionage tasks, specially to operate in rough terrains with a lot of dirt and humidity.

Robotized inspection systems have also been developed wherein rubber or polyurethane wheels are provided but which correspond to conventional elements associated to driving mechanisms, which have the purpose of providing the necessary driving effect according to the terrain conditions. One solution of this type may be visualized in patent JP8080845, but with similar limitations as those previously mentioned.

There is thus a need to count with a wheel applicable to all type of vehicles and specially robot vehicles and their operations. The present invention sets forth a solution which basically consists of a wheel made entirely of rubber in which an important part of its external radius is composed by flexible flaps which purpose is to encompass a greater surface contact area in comparison to a wheel with similar width and diameter. This design allows absorbing the gaps and obstacles in any type of terrain while at the same time to function as a progressive buffer due to the shape of each flap. This has the quality that should a video camera be mounted on a vehicle, its vision will be very stable and will not produce a vibration effect which is typical in known vehicles, which generate control problems and premature weariness of the operator.

When a set of wheels is mounted in the body of a particular vehicle, each wheel functions as protection against impact. Likewise, it possesses an excellent driving system in complicated terrains like high grass, mud and gravel. Unlike caterpillar type wheels or others used in automatized vehicles, the wheel of the present invention is able to reach high speed, the flaps thus expanding to render the contact area and friction to a minimum and increasing the efficiency of the motor system. When slowing down, the flaps immediately contract and the wheel once again has a large contact area generating a very short breakage area.

The shape of the flaps also allows incorporating this wheel in water vehicles since they constitute an excellent propellant system in water, allowing a movable system which is completely amphibious and water controllable.

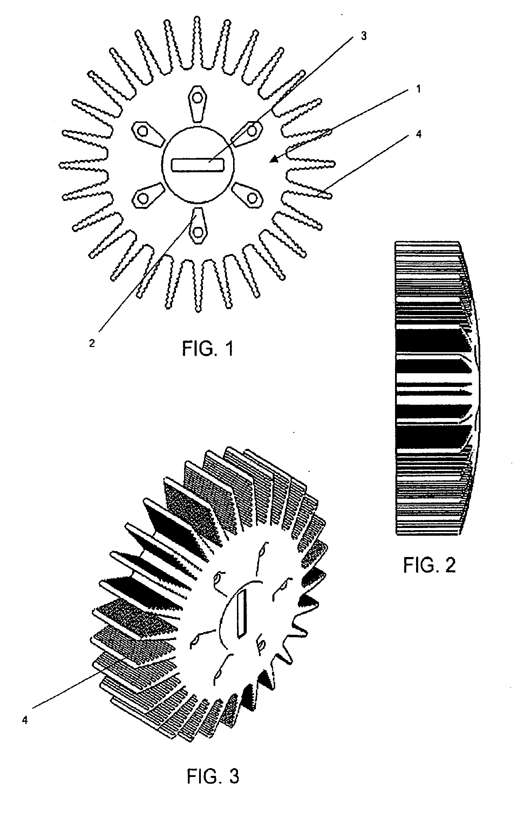

Figure 1 represents an elevated view of the wheel of the present invention.

Figure 2 represents a cross sectional view of the wheel of the present invention.

Figure 3 represents an isometric perspective view of the wheel of the present invention.

Figure 4 represents a close up view of one section of the wheel where one can visualize the flaps and details of the same.

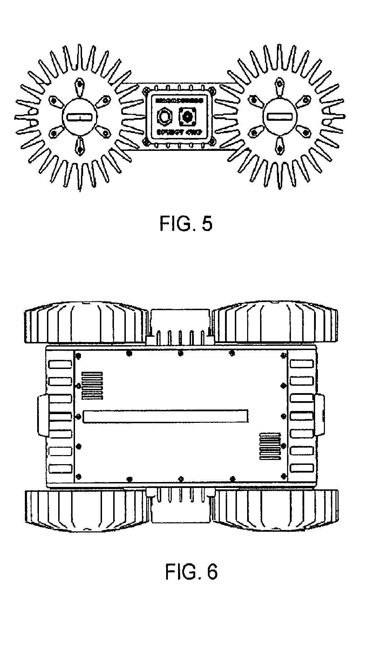

Figure 5 represents upper plant view of a set of wheels mounted on a particular vehicle.

Figure 6 represents an elevated view of the wheels mounted in a particular vehicle.

Figure 7 represents a scheme which illustrates the differences generated in the contact surface are between a conventional wheel and the wheel of the present invention.

The invention consists of a single body wheel which comprises two zones. The first zone comprises the center (1) or central part of the wheel which corresponds to a sturdy structure in which core there are mechanisms (2) disposed through which the wheel will be mounted and reinforced in the body or structure of a particular vehicle. In this regard, the center of the wheel has a safety device (3) intended to hook the wheel to the propellant axis which originates from the chassis of a vehicle. The elements (2) correspond to insertions with orifices intended to pierce screws or other safeguarding elements to secure the wheel towards a vehicle.

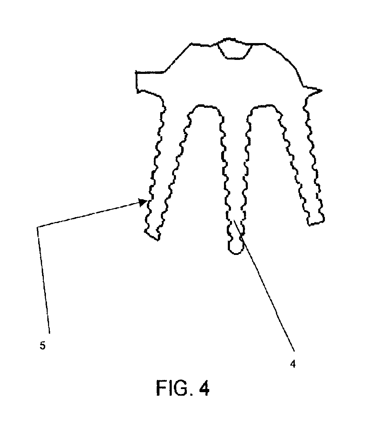

The second zone consists of multiple flexible flaps (4) bom radially from the point where the first zone finalizes. Strictly speaking, the flaps are composed of the same material as the rest of the body but due to its longitude and transversal section possesses great flexibility being able to adapt to any terrain. Likewise, each flap comprises nerves (5) which grant even more flexibility to each flap, as can be appreciated in figure 4. The flaps (4) have a V transversal section inverted as they move further away from the center of the wheel in a radial way. This configuration was thought of, aside from granting a greater degree of flexibility, to grant greater resistance to renting from the zone defined by the central body of the wheel.

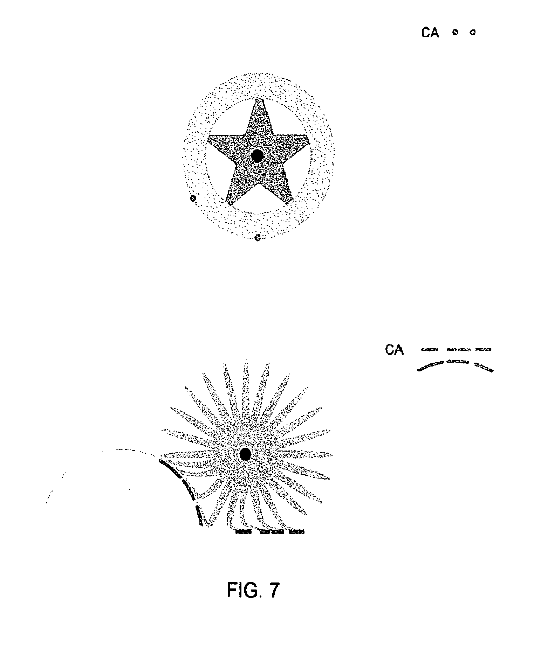

When the wheel is mounted in a particular robotized vehicle, the weight of this vehicle will cause the flaps to flect increasing the contact surface area, (CA) over which it moves. Thus, as can be appreciated from figure 7, the adherence level of the wheel of the present invention will correspond to a strip of terrain unlike a conventional wheel which only makes contact (CA) at a tangential level, this is, the contact with the surface of the terrain is only punctual.

With the configuration of the wheel it is possible to obtain a layer which, with a small size wheel, it is possible to obtain high speed with great adherence characteristics in spy robot vehicle units. Thus it is possible to build a spy robot vehicle with excellent driving system and which exceeds the expectative and specifications thought of for any robot vehicle over rough surfaces or irregular forms not withstanding the height or speed of movement. The flexible configuration of the wheels aside from adapting to obstacles in a particular surface and maximizing the friction and adherence over the same, it allows for the creation of new uses in robot vehicles, specially if these last ones are incorporated with video transmission system, and radio transmission standard in the market.

The wheel of the present invention is comprised preferably of rubber, urethane or similar. However, tests have been carried out with other type of plastic materials of great resistance which are also flexible when the flaps are configured in it.

## Claims

1. Wheel to be incorporated in vehicles of automatic movement and control, preferably robot type vehicles for use over rugged terrains, with slopes, rough, muddy or slippery in general, whereby **characterized in that** such wheel is comprised of a single body which comprises two zones: a first zone which defines the center or central body of the wheel and a second zone comprised of multiple flexible flaps and which are bom radially at the point where said first zone ends.

2. Wheel to be incorporated in vehicles according to Claim 1, **characterized in that** said primary zone is composed by the central body composed by a sturdy structure in which core there are mechanisms through which the wheel will be installed and secured to the body or structure of a particular vehicle.

3. Wheel to be incorporated in vehicles according to Claim 2 **characterized in that** in said core or center of the wheel there is a safety devise destined to hook the wheel in a propellant axis originated from the chassis of a vehicle.

4. Wheel to be incorporated in vehicles according to Claim 3 **characterized in that** said mechanisms correspond to insertions with orifices intended to pierce screws or other safety elements in order to secure the wheel to a vehicle.

5. Wheel to be incorporated to vehicles according to Claim 1 **characterized in that** said flaps have longitudinal nerves.

6. Wheel to be incorporated in vehicles according to Claim 1 **characterized in that** said flaps have a V transversal section inverted as they move further away radially from the center of the wheel.

7. Wheel to be incorporated in vehicles according to Claim 1 **characterized in that** it is preferably composed of rubber, urethane or similar.
